# EUROPEAN PATENT SPECIFICATION

(11) **EP 1 811 198 B1**
(45) Date of publication and mention of the grant of the patent: **30.06.2010**
(21) Application number: 07000336.3
(22) Date of filing: 09.01.2007
(51) Int. Cl.: F16F 9/32, B60G 17/044

(54) **Piston rod of vehicle height adjusting shock absorber and method of machining the same**
Kolbenstange eines die Fahrzeughöhe regelnden Stoßdämpfers und Bearbeitungsverfahren dafür
Tige de piston d'un absorbeur de choc ajustant la hauteur d'un véhicule et procédé d'usinage de celle-ci

(30) Priority: 20.01.2006 KR 20060006194
(43) Date of publication of application: 25.07.2007
(73) Proprietor: Mando Corporation, Seoul 135-739 (KR)
(72) Inventor: Kim, Hak Kyo, Iksan-si Jeollabuk-do 570-160 (KR)
(74) Representative: Bosch, Matthias

(56) References cited:
- DE-C1- 19 848 798
- FR-A- 1 372 092
- GB-A- 2 159 235
- US-A- 4 577 840
- US-A- 5 062 616
- US-A- 5 988 655

## Description

### BACKGROUND OF THE INVENTION

### 1. Field of Invention

The present invention relates to a piston rod of a vehicle height adjusting shock absorber and a method of machining the same, and more particularly, to a piston rod of a vehicle height adjusting shock absorber, in which a member with a hollow portion formed therein, such as a pipe, is used in a machining process of the piston rod, thereby improving a degree of cleanness in the hollow portion of the piston rod and linearity of the hollow portion due to a small amount of eccentricity, and a method of machining the piston rod.

### 2. Description of the Prior Art

In general, a vehicle is equipped with a shock absorbing apparatus for improving ride comfort by absorbing shocks or vibrations transferred from a road to an axle in driving the vehicle. As an example of such a shock absorbing apparatus, a shock absorber is used. The shock absorber is installed between an axle and a vehicle body, and the interior thereof is filled with filler such as gas or oil in order to increase damping force.

In addition to the function of absorbing shocks of the vehicle, the shock absorber is provided with a function of adjusting a height of the vehicle for keeping the vehicle height constant regardless of the number of passengers or a baggage weight according to technical improvement. Such a shock absorber is classified as a vehicle height adjusting shock absorber.

A conventional vehicle height adjusting shock absorber includes a base shell, an inner tube installed inside the base shell, and a blade and an outer tube longitudinally installed between the base shell and the inner tube. A piston rod is also installed in the inner tube to be movable up and down, and an upper eye to be coupled with a vehicle body is provided in an upper portion of the piston rod.

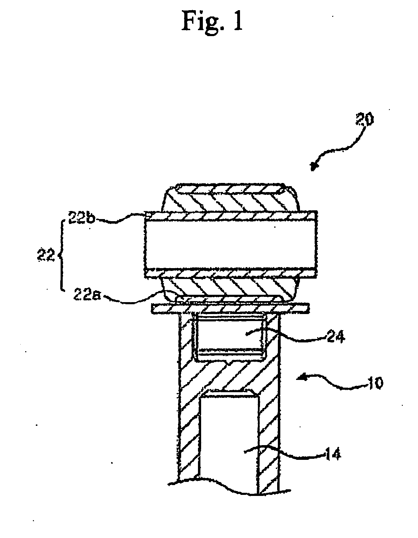

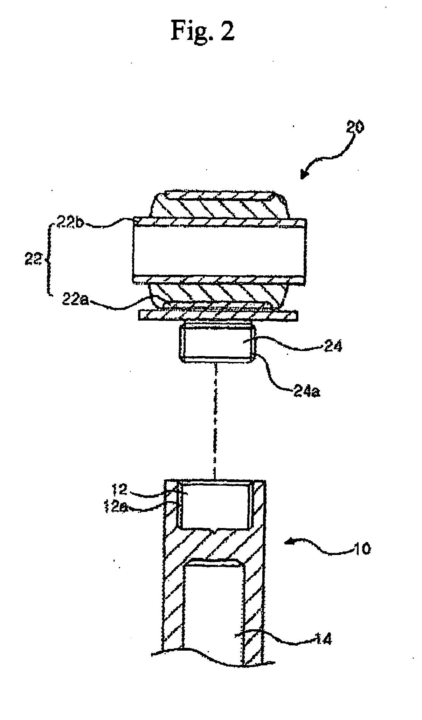

Fig. 1 is a sectional view of a part of a piston rod according to a prior art, and Fig. 2 is a sectional view showing that an upper eye is separated from the part of the conventional piston rod.

As shown in Figs. 1 and 2, in a conventional piston rod 10, a coupling recess portion 12 to be coupled with an upper eye 20 is formed in an upper end of the piston rod 10, and a thread 12a is machined on an inner surface of the coupling recess portion 12. In addition, the piston rod 10 is formed with a hollow portion 14 into which a pump tube is to be inserted.

Meanwhile, the upper eye 20 is integrally formed with a ring portion 22 including inner and outer rings 22a and 22b to be coupled with the vehicle body and a coupling portion 24 to be coupled to the coupling recess portion 12 of the piston rod 10. The coupling portion 24 is formed with a thread 24a corresponding to the thread 12a formed in the coupling recess portion 12.

The piston rod 10 is made of a circular rod, in which the hollow portion 14 is formed therein by machining both ends of the circular rod by means of a tool such as a gun drill.

However, in case of the piston rod 10 of the conventional vehicle height adjusting shock absorber, if the hollow portion 14 is longer, eccentricity occurs in a process of machining the hollow portion 14. Thus, there are problems in that linearity of the hollow portion 14 is deteriorated and the machined inner surface of the hollow portion 14 is not smooth. Accordingly, friction and wear can occur between the hollow portion 14 and the pump tube to be inserted therein, and if severe, the products can be deformed,

Further, it is not easy to remove chips generated in the hollow portion 14 when it is machined, which causes the problem that an inner channel of the shock absorber is clogged with the chips remaining after the machining.

In addition, since the piston rod 10 is machined from a circular rod, there are problems in that the increased working time is required and the manufacturing costs are increased.

### SUMMARY OF THE INVENTION

The present invention is conceived to solve the aforementioned problems in the prior art. An object of the present invention is to provide a piston rod of a vehicle height adjusting shock absorber, in which a member with a hollow portion formed therein, such as a pipe, is used in a machining process of the piston rod, thereby improving a degree of cleanness in the hollow portion of the piston rod, and easily managing its eccentricity to cause inferior products to be reduced, and a method of machining the piston rod.

According to an aspect of the present invention as defined in claim 1 for achieving the object, there is provided a piston rod installed to a vehicle height adjusting shock absorber. The piston rod comprises a body portion having a hollow portion formed therein and both ends opened; a catching portion formed to be spaced apart by a predetermined distance inwardly from one end of the hollow portion; and a plug member inserted into the hollow portion from the other end thereof to plug the open hollow portion, the guide member being caught to the catching portion for the movement of the guide member to be constrained.

The piston rod may further comprise an O-ring installed to at least any one of the plug member and the hollow portion corresponding thereto to seal a gap therebetween. Further, a thread having a predetermined length may be formed on the one end of the hollow portion. Furthermore, the plug member may be formed with a step portion corresponding to an inner diameter of the catching portion.

In addition, according to another aspect of the present invention as defined in claim 5 for achieving the object, there is provided a method of machining a piston rod installed to a vehicle height adjusting shock absorber. The method comprises the steps of preparing a body portion having a hollow portion formed therein and both ends opened; machining an inner surface of the hollow portion from one end thereof to form a catching portion to be spaced apart by a predetermined distance inwardly from the other end of the hollow portion; and contacting a plug member with the catching portion by inserting the plug member into the hollow portion from the open one end thereof after providing the plug member corresponding to the machined inner surface of the hollow portion.

The contacting step may comprise the step of installing an O-ring to at least any one of the guide member and the hollow portion corresponding thereto to seal a gap therebetween.

### BRIEF DESCRIPTION OF THE DRAWINGS

The above and other objects, features and advantages of the present invention will become apparent from the following description of a preferred embodiment given in conjunction with the accompanying drawings, in which:
Fig. 1 is a sectional view of a part of a piston rod according to a prior art;
Fig. 2 is a sectional view showing that an upper eye is separated from the part of the conventional piston rod;
Fig. 3 is a sectional view of a vehicle height adjusting shock absorber having a piston rod according to the present invention; and
Fig. 4 is a sectional view showing that an upper eye is separated from a part of the piston rod according to the present invention.

### DETAILED DESCRIPTION OF THE PREFERRED EMBODIMENT

Hereinafter, a preferred embodiment according to the present invention will be described in detail with reference to the accompanying drawings.

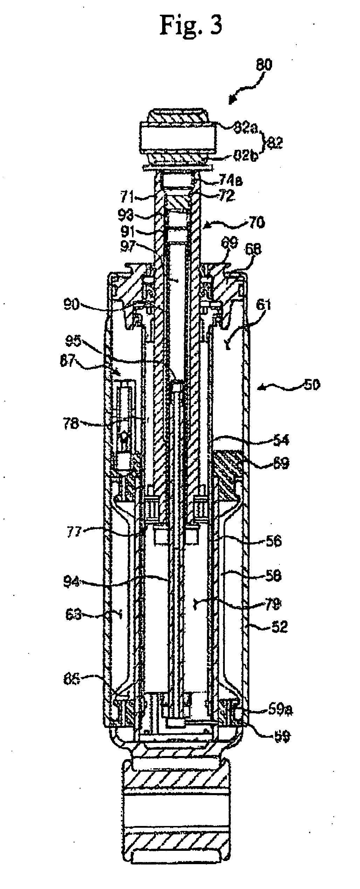

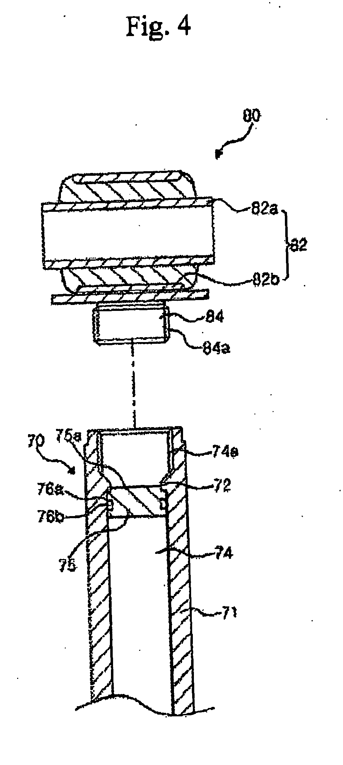

Fig. 3 is a sectional view of a vehicle height adjusting shock absorber having a piston rod according to the present invention, and Fig. 4 is a sectional view showing that an upper eye is separated from a part of the piston rod according to the present invention.

As shown in Fig. 3, a vehicle height adjusting shock absorber 50 according to the present invention includes a base shell 52, an inner tube 54 installed inside the base shell 52, and an outer tube 56 and a membrane 58 longitudinally installed between the base shell 52 and the inner tube 54.

The membrane 58 is fixed by means of brackets 59 installed between the base shell 52 and the outer tube 56, Preferably, both ends of the membrane 58 are shaped so as to be sealed. In addition, the bracket 59 is formed with a vent 59a for making chambers separated by the bracket to communicate with each other.

A space enclosed with the inner tube 54 and the base shell 52 defines a base chamber 61. A space enclosed with the membrane 58 and the base shell 52 and a space enclosed with the membrane 58 and the outer tube 56 respectively define a gas chamber 63 and a high pressure chamber 65 which are separated from each other. In addition, a relief valve 67 for controlling a pressure in the high pressure chamber 65 to a certain pressure is installed in a side of the outer tube 56.

In the meantime, a piston rod 70 is installed inside the inner tube 54 to be movable up and down, and a rod guide 68 and an oil seal 69 are installed in an upper end of the inner tube 54 to guide of the movement of the piston rod 70.

A piston valve 77 is installed to an end of the piston rod 70 to divide the interior of the inner tube 54 into a rebound chamber 78 and a compression chamber 79 and to control the flow of fluid between the rebound chamber 78 and the compression chamber 79.

In the meantime, the piston rod 70 has a hollow pump tube 90 installed therein to adjust height of a vehicle. A hollow pump rod 94 is inserted into the pump tube 90, so that a pump chamber 97 is defined in a space between the pump tube 90 and the pump rod 94. In addition, an inlet valve 95 is provided in an upper end of the pump rod 94, and an outlet valve 91 opened and closed by the up and down operation of the piston rod is provided in an upper end of the pump tube 90. The outlet valve 91 is supported at its upper portion by a spring 93 positioned thereon, thus compressing the spring 93 and being opened.

To this end, as shown in Fig. 4, the piston rod 70 includes a body portion 71 in which a hollow portion 74 is formed in an axial direction, and both ends of the hollow portion 74 are opened.

In addition, the body portion 71 is formed with a catching portion 72 which is positioned to be spaced apart by a predetermined distance inwardly from one end of the hollow portion 74. Preferably, the body portion 71 is the member, such as a pipe, in which the hollow portion 74 is previously formed, and the catching portion 72 in the hollow portion 74 can be formed by machining the interior of the hollow portion 74 of the body portion.

Also, the plug member 75 is inserted into the hollow portion 74 to plug the open hollow portion 74. At this time, the plug member 75 is inserted from the other end of the hollow portion 74, and caught to the catching portion 72 for the movement of the plug member 75 to be constrained.

In addition, the plug member 75 is formed with a step portion 75a corresponding to an inner diameter of the catching portion 72, whereby the body portion 71 and the plug member 75 are more securely coupled to each other. Also, a predetermined groove 76a is formed around the plug member 75, and an 0-ring 76b fitted into the groove 76a causes a gap between the body portion 71 and the groove 76a to be sealed. Further, a thread 74a having a predetermined length is formed on the one end of the hollow portion 74, so that an upper eye 80 is engaged to the thread 74a in order to be coupled with a vehicle body. The upper eye 80 includes a ring portion 82 having inner and outer rings 82a and 82b to be coupled with the vehicle body, and a coupling portion 84 engaged to the upper end of the hollow portion 74 of the piston rod 70. The coupling portion 84 is formed with a thread 84a corresponding to the thread 74a of the hollow portion 74 to be engaged therewith.

A method of machining the piston rod so configured will be described as follows.

First, there is provided the body portion 71, such as a pipe, having the hollow portion 74 formed therein. The inner surface of the hollow portion 74 is machined from the other end thereof so that the catching portion 72 is formed at the position spaced apart by the predetermined distance from the one end of the hollow portion 74.

Next, there is provided the plug member 75 having an outer diameter corresponding to an inner diameter of the hollow portion 74. At this time, the groove 76a having a predetermined size is formed in the outer peripheral portion of the plug member 75, and the O-ring 76b is coupled to the groove 76a.

The plug member 75 provided as above is pushed into the hollow portion 74 from the other end thereof in order to plug the opening of the hollow portion 74. At this time, the plug member 75 is caught and thus fixed to the catching portion 72 formed in the hollow portion 74.

In the meantime, the coupling portion 84 of the upper eye 80 is threadly engaged to the thread 74a formed on the one end of the hollow portion 74.

As described above, in a case where a piston rod of a vehicle height adjusting shock absorber is made using a member of a pipe shape, there is no need for an additional machining work for forming a hollow portion in the piston rod. Accordingly, the shock absorber is easily manufactured, and thus the working speed is improved. In addition, since the hollow portion is machined by means of a tool such as a gun drill, the eccentricity is easily managed. Also, a degree of cleanness for a machined inner surface is improved, thereby improving quality of the products

The piston rod according to the present invention is manufactured using a member which is hollow . Therefore, the piston rod is easily manufactured due to the unnecessity of additionally machining the interior of the piston rod, thereby improving the manufacturing yield. Also, the eccentricity is easily managed in manufacturing the hollow portion, so that the linearity of the hollow portion can be improved. Further, a degree of cleanness for the machined inner surface can be improved, thus to enhance the quality of the products. Since the linearity of the hollow portion is improved as described above, the hollow portion does not interfere with a pump rod installed therein, thereby enhancing the durability and stability of the products.

Although the piston rod of a vehicle height adjusting shock absorber according to the present invention and the method of machining the piston rod are described with reference to the illustrated drawings, the present invention is not limited to the aforementioned embodiment and drawings. It will be apparent that those skilled in the art can make various modifications and changes thereto within the scope of the invention defined by the claims.

For example, although it has been described in the embodiment of the present invention that the O-ring for improving the sealing force of the piston rod is coupled to the groove formed in the guide member or upper eye, it is possible to form a groove in the hollow portion at the corresponding position when the guide member or upper eye is coupled and then to couple the O-ring thereto.

## Claims

1. A piston rod installed to a vehicle height adjusting shock absorber, comprising:
- a body portion (71) having a hollow portion (74) formed therein and both ends opened; and
- a connection member (80) coupled with the one end of the body portion (71) to connect the piston rod (70) to a vehicle body, the piston rod being **characterized by** comprising:
- a catching (72) formed to be spaced a part by a predetermined distance inwardly from one end of the body portion (71); and
- a plug member (75) inserted into the hollow portion (74) from the other end of the body portion (71) to plug the open hollow portion (74), the plug member (75) being caught to the catching portion (72) for the movement of the plug member (75) to be constrained.

2. The piston rod as claimed in claim 1, further comprising an O-ring (76b) installed to at least one of the plug member (75) and the inner surface of the body portion (71) corresponding thereto to seal a gap there between.

3. The piston rod as claimed in claim 1, wherein a thread (74a) having a predetermined length is formed on the inner surface of the body portion (71) to which the one end of the hollow portion (74) corresponds.

4. The piston rod as claimed in anyone of claims 1 to 3, wherein the plug member (75) is formed with a step portion (75a) corresponding to an inner diameter of the catching portion (72).

5. A method of machining a piston rod installed to a vehicle height adjusting shock absorber, comprising the steps of:
- preparing a body portion (71) having a hollow portion (74) formed therein and both ends opened; and
- coupling a connection member (80) with one of said ends of the body portion (71), the connection member (80) connecting the piston rod (70) to a vehicle body, the method being **characterized by** comprising the steps of:
- machining a catching portion (72) formed to be spaced apart by a predetermined distance inwardly from one end of the hollow portion (74); and
- contacting a plug member (75) with the catching portion (72) by inserting the plug member (75) into the hollow portion (74) from the open other end of the hollow portion (74) after providing the plug member (75) corresponding to the machined inner surface of the body portion (71).

6. The method as claimed in claim 5, wherein the contacting step comprises the step of installing an O-ring (76b) to at least one of the plug member (75) and the inner surface of the body portion (71) corresponding thereto to seal a gap there between.

## Patentansprüche

1. Kolbenstange, die an einem die Fahrzeughöhe regulierenden Stoßdämpfer montiert ist, mit:
- einem Körperabschnitt (71), der einen hohlen Abschnitt (74) aufweist, der darin ausgebildet ist und bei dem beide Enden geöffnet sind; und
- einem Verbindungselement (80), das mit dem einen Ende des Körperabschnitts (71) gekoppelt ist, um die Kolbenstange (70) mit einer Fahrzeugkarosserie zu verbinden, wobei die Kolbenstange **dadurch gekennzeichnet ist, dass** sie Folgendes umfasst:
- einen Anschlagabschnitt (72), der so ausgebildet ist, dass er um eine vorbestimmte Distanz nach innen gerichtet von einem Ende des Körperabschnitts (71) beabstandet ist; und
- ein Verschlussstopfenelement (75), das in den hohlen Abschnitt (74) ausgehend von dem anderen Ende des Körperabschnitts (71) eingeführt ist, um den offenen hohlen Abschnitt (74) mit einem Stopfen zu verschließen, wobei das Verschlussstopfenelement (75) an dem Anschlagabschnitt (72) festgesetzt ist bzw. damit in Eingriff steht, um die Bewegung des Verschlussstopfenelements (75) zu beschränken.

2. Kolbenstange nach Anspruch 1, die des Weiteren einen O-Dichtring (76b) umfasst, der an wenigstens einem von dem Verschlussstopfenelement (75) und der inneren Fläche des Körperabschnitts (71), die diesem entspricht, montiert ist, um einen Spalt zwischen diesen abzudichten.

3. Kolbenstange nach Anspruch 1, wobei ein Gewinde (74a), das eine vorbestimmte Länge aufweist, auf der inneren Fläche des Körperabschnitts (71) ausgebildet ist, welcher das eine Ende des hohlen Abschnitts (74) entspricht.

4. Kolbenstange nach einem der Ansprüche 1 bis 3, wobei das Verschlussstopfenelement (75) mit einem Stufenabschnitt (75a) ausgebildet ist, der zu einem Innendurchmesser des Anschlagabschnitts (72) passt.

5. Verfahren zur maschinellen bzw. spanabhebenden Bearbeitung einer Kolbenstange, die an einem die Fahrzeughöhe regulierenden Stoßdämpfer montiert wird, das die folgenden Schritte umfasst:
- Fertigen eines Körperabschnitts (71), der einen hohlen Abschnitt (74) aufweist, der darin ausgebildet ist und bei dem beide Enden geöffnet sind; und
- Koppeln eines Verbindungselements (80) mit einem der Enden des Körperabschnitts (71), wobei das Verbindungselement (80) die Kolbenstange (70) mit einer Fahrzeugkarosserie verbindet, wobei das Verfahren **dadurch gekennzeichnet ist, dass** es die folgenden Schritte umfasst:
- maschinelles bzw. spanabhebendes Bearbeiten eines Anschlagabschnitts (72), der so ausgebildet wird, dass er um eine vorbestimmte Distanz nach innen gerichtet von einem Ende des hohlen Abschnitts (74) beabstandet ist; und
- in Kontakt Bringen eines Verschlussstopfenelements (75) mit dem Anschlagabschnitt (72) durch Einführen des Verschlussstopfenelements (75) in den hohlen Abschnitt (74) ausgehend von dem offenen anderen Ende des hohlen Abschnitts (74) nach dem Bereitstellen des Verschlussstopfenelements (75), das zu der maschinell bearbeiteten inneren Fläche des Körperabschnitts (71) passt.

6. Verfahren nach Anspruch 5, wobei der Schritt des in Kontakt Bringens den Schritt des Montierens eines O-Dichtrings (76b) an wenigstens einem von dem Verschlussstopfenelement (75) und der inneren Fläche des Körperabschnitts (71), die diesem entspricht, umfasst, um einen Spalt zwischen diesen abzudichten.

## Revendications

1. Tige de piston installée sur un amortisseur réglable en hauteur de véhicule, comprenant :
- une partie de corps (71) ayant une partie creuse (74) formée dans celle-ci et les deux extrémités ouvertes ; et
- un élément de connexion (80) couplé avec l'une extrémité de la partie de corps (71) pour connecter la tige de piston (70) à la carrosserie d'un véhicule, la tige de piston étant **caractérisée en ce que** comprenant :
- une partie d'agrippement (72) formée de façon à être espacée d'une distance prédéterminée vers l'intérieur à partir d'une extrémité de la partie de corps (71) ; et
- un élément de fermeture (75) inséré à l'intérieur de la partie creuse (74) par l'autre extrémité de la partie de corps (71) pour fermer la partie creuse (74) ouverte, l'élément de fermeture (75) étant pris avec la partie d'agrippement (72) pour que le mouvement de l'élément de fermeture (75) soit limité.

2. Tige de piston selon la revendication 1, comprenant en outre un joint torique (76b) installé sur au moins l'un de l'élément de fermeture (75) et de la surface intérieure de la partie de corps (71) correspondant à celui-ci pour fermer un espace entre ceux-ci.

3. Tige de piston selon la revendication 1, dans laquelle un filetage (74a) ayant une longueur prédéterminée est formé sur la surface intérieure de la partie de corps (71) à laquelle l'une extrémité de la partie creuse (74) correspond.

4. Tige de piston selon l'une quelconque des revendications 1 à 3, dans laquelle l'élément de fermeture (75) est formé avec une partie en marche (75a) correspondant à un diamètre intérieur de la partie d'agrippement (72).

5. Procédé d'usinage d'une tige de piston installée sur un amortisseur réglable en hauteur de véhicule, comprenant les étapes de :
- préparation d'une partie de corps (71) ayant une partie creuse (74) formée dans celle-ci et les deux extrémités ouvertes ; et
- couplage d'un élément de connexion (80) avec l'une desdites extrémités de la partie de corps (71), l'élément de connexion (80) connectant la tige de piston (70) à la carrosserie d'un véhicule, le procédé étant **caractérisé en ce que** comprenant les étapes de :
- usinage d'une partie d'agrippement (72) formée de façon à être espacée d'une distance prédéterminée vers l'intérieur à partir d'une extrémité de la partie creuse (74) ; et
- mise en contact d'un élément de fermeture (75) avec la partie d'agrippement (72) en insérant l'élément de fermeture (75) à l'intérieur de la partie creuse (74) par l'autre extrémité ouverte de la partie creuse (74) après prévision de l'élément de fermeture (75) correspondant à la surface intérieure usinée de la partie de corps (71).

6. Procédé selon la revendication 5, dans lequel l'étape de mise en contact comprend l'étape d'installation d'un joint torique (76b) sur au moins l'un de l'élément de fermeture (75) et de la surface intérieure de la partie de corps (71) correspondant à celui-ci pour fermer un espace entre ceux-ci.
